Europäisches Patentamt

European Patent Office

Office européen des brevets

(11) Numéro de publication : **0 456 547 A1**

## (12) DEMANDE DE BREVET EUROPEEN

(21) Numéro de dépôt : **91401107.7**

(51) Int. Cl.⁵ : **H04Q 7/04, H04B 7/26**

(22) Date de dépôt : **25.04.91**

(30) Priorité : **09.05.90 FR 9005792**

(43) Date de publication de la demande :
**13.11.91 Bulletin 91/46**

(84) Etats contractants désignés :
**AT BE CH DE DK ES FR GB GR IT LI LU NL SE**

(71) Demandeur : **DASSAULT ELECTRONIQUE**
**55, quai Marcel Dassault**
**F-92214 Saint-Cloud (FR)**

(72) Inventeur : **Le Bastard, Jean**
**5, rue de Versailles**
**F-78150 Le Chesnay (FR)**

(74) Mandataire : **Plaçais, Jean-Yves et al**
**Cabinet Netter, 40, rue Vignon**
**F-75009 Paris (FR)**

(54) **Dispositif et procédé d'interconnexion téléphoniques pour réseau de communication à stations autonomes.**

(57)  Un module spécifique (PAP) comprend des premières et secondes interfaces téléphoniques (MIC) respectivement raccordées aux canaux téléphoniques du réseau, des moyens d'interconnexion (BMIC) entre ces premières et secondes interfaces et des moyens de traitement (UC). En réponse à une demande d'appel téléphonique d'un poste téléphonique appelant vers un numéro d'appel attribué à un combiné portatif appelable, ladite demande d'appel étant reçue en l'une des premières interfaces :
— on cherche à établir en plus de la première connexion téléphonique du poste appelant vers ladite première interface, une deuxième connexion téléphonique du combiné autonome vers l'une des secondes interfaces en fonction de conditions prédéterminées, et on réalise l'interconnexion des première et seconde interfaces concernées.

EP 0 456 547 A1

FIG.2

L'invention concerne la téléphonie.

Elle est plus particulièrement destinée à servir dans un réseau de communication entre stations fixes, telles que des postes téléphoniques, et bornes fixes capables de coopération mutuelle à distance avec des stations autonomes, telles que des combinés téléphoniques portatifs, en réponse à des demandes d'appel de ces dernières.

Un tel réseau est par exemple celui connu sous la Marque déposée POINTEL et l'invention y trouve une application particulièrement avantageuse mais non limitative.

Le réseau POINTEL est jusqu'à présent prévu pour permettre et gérer des appels téléphoniques en provenance de combinés autonomes à destination de postes téléphoniques raccordés par exemple au réseau téléphonique commuté public. De tels appels sont qualifiés d'"appels sortants".

Il n'est actuellement pas possible d'effectuer et de gérer des appels "entrants", c'est-à-dire des appels émanant notamment de postes téléphoniques raccordés au réseau téléphonique commuté public, à destination de combinés autonomes.

L'invention vise à apporter une solution à ce problème.

Selon une caractéristique générale de l'invention, le dispositif téléphonique, destiné à servir dans un réseau de communication du type de celui évoqué ci-avant, comprend au moins un module spécifique comportant :

- des premières et secondes interfaces téléphoniques respectivement raccordées aux canaux téléphoniques du réseau,
- des moyens d'interconnexion entre ces premières et secondes interfaces,
- des moyens de traitement propres à répondre à une demande d'appel téléphonique d'une station appelante vers un numéro d'appel attribué à une station autonome appelable, ladite demande d'appel étant reçue en l'une des premières interfaces :

. en cherchant à établir en plus de la première connexion téléphonique de la station appelante vers ladite première interface , une deuxième connexion téléphonique de la station autonome vers l'une des secondes interfaces en fonction de conditions prédéterminées, et

. en réalisant l'interconnexion des première et seconde interfaces concernées.

Ces conditions prédéterminées peuvent comporter par exemple la vérification de la présence effective d'un abonné de la station autonome, prêt à accepter l'appel téléphonique.

Selon un mode de réalisation, l'établissement de la deuxième connexion téléphonique comprend l'établissement d'une liaison téléphonique entre ladite seconde interface concernée et une borne fixe choisie, capable de coopérer avec la station autonome appelable. Dans ce cas, les conditions prédéterminées peuvent également comporter la vérification de la capacité effective de la borne choisie à coopérer avec la station autonome.

Selon ce mode de réalisation, l'établissement de la liaison téléphonique résulte d'un appel téléphonique de ladite borne choisie vers le module spécifique.

Lorsque le réseau de communication est muni en outre d'un milieu de communication numérique, le module spécifique comporte alors des moyens d'interfaces numériques reliés audit milieu, et les moyens de traitement sont alors avantageusement propres, en vue de l'établissement de la deuxième connexion téléphonique, à établir une liaison numérique, sur ledit milieu, entre les moyens d'interfaces numériques et ladite borne choisie, cet établissement étant antérieur à celui de la liaison téléphonique sur les canaux téléphoniques. Cette liaison numérique peut comporter l'émission d'un signal numérique depuis le module spécifique vers ladite borne choisie.

Très avantageusement, il est prévu des moyens formant base de données, reliés aux moyens de traitement du module spécifique, et propres à stocker, en correspondance du numéro d'appel de la station autonome, une information de localisation de ladite borne choisie, permettant l'établissement de la liaison téléphonique.

Cette information de localisation peut résulter d'un dialogue de localisation entre la station autonome appelable et ladite borne choisie. Ce dialogue de localisation peut comporter l'émission d'un signal de localisation depuis la station autonome appelable vers ladite borne choisie. Il peut également comporter, en variante, une communication téléphonique antérieure entre la station autonome et la borne choisie.

Lorsque sont disponibles deux informations de localisation de type différent, résultant notamment de deux dialogues de localisation de type différent, ces informations de localisation étant relatives à deux bornes choisies différentes, il est particulièrement avantageux que les moyens formant bases de données soient alors propres à stocker ces deux informations de localisation.

Selon un mode de réalisation de l'invention, l'information de localisation est une information de type numérique permettant l'établissement de ladite liaison numérique. Dans ce cas, lorsque le dispositif comprend des unités de raccordement de bornes fixes, chaque unité de raccordement étant reliée, d'une part à un groupe de bornes fixes, d'autre part au moins au milieu de communication numérique du réseau, l'information de localisation comporte alors l'identification numérique de l'unité de raccordement reliée à ladite borne choisie, ainsi que la désignation de ladite borne choisie au sein du groupe de bornes gérées par cette unité de raccordement.

Selon un autre aspect de l'invention, en cas de non satisfaction des conditions prédéterminées relativement à ladite borne choisie, le dispositif est alors avantageusement apte à chercher à établir la liaison téléphonique avec au moins une autre borne prise parmi les bornes voisines de ladite borne choisie.

Un numéro d'appel d'une station autonome est généralement associé à son lieu de rattachement habituel; le dispositif selon l'invention peut alors comprendre une pluralité de modules spécifiques affectés respectivement à une pluralité de lieux de rattachement voisins.

Il est alors possible que les moyens formant base de données soient répartis en des bases de données locales associées à chaque module spécifique et disposant des informations de localisation des bornes choisies relatives à leurs stations autonomes habituelles. Cependant, il peut être également prévu que ces moyens formant bases de données soient centralisés, chaque module spécifique ayant alors accès à cette base de données centralisée.

Il est également prévu que le dispositif selon l'invention puisse être raccordé, aussi bien à un réseau de commutation public, qu'à un réseau de commutation privé.

L'invention a également pour objet un procédé d'interconnexion téléphonique, destiné à servir dans un réseau de communication entre stations fixes et bornes fixes capables de coopération mutuelle à distance avec des stations autonomes, en réponse à des demandes d'appel de ces dernières, caractérisé en ce qu'on prévoit au moins un module spécifique comprenant :

    – des premières et secondes interfaces téléphoniques respectivement raccordées aux canaux téléphoniques du réseau,

    – des moyens d'interconnexion entre ces premières et secondes interfaces,

    – des moyens de traitement propres à répondre à une demande d'appel téléphonique d'une station appelante vers un numéro d'appel attribué à une station autonome appelable, ladite demande étant reçue en l'une des premières interfaces,

et en ce qu'en réponse à une telle demande d'appel téléphonique :

    . on cherche à établir, en plus de la première connexion téléphonique de la station appelante vers ladite première interface, une deuxième connexion téléphonique de la station autonome vers l'une des secondes interfaces en fonction de conditions prédéterminées et,

    . on réalise l'interconnexion des première et seconde interfaces concernées.

D'autres avantages et caractéristiques de l'invention apparaîtront à l'examen de la description détaillée ci-après et des dessins annexés sur lesquels :

    – la figure I représente un synoptique schématique d'un réseau de communication du genre POINTEL de l'art antérieur;

    – la figure 2 représente un synoptique schématique d'un réseau de communication public et privé équipé de moyens selon l'invention;

    – la figure 3 représente un synoptique schématique d'un mode de réalisation d'un dispositif selon l'invention, plus particulièrement destiné à être raccordé à un réseau de commutation public;

    – la figure 4 représente un synoptique d'une partie du dispositif de la figure 3;

    – la figure 5 représente un synoptique schématique d'un mode de réalisation du dispositif selon l'invention, plus particulièrement destiné à être raccordé à un réseau de commutation privé et,

    – la figure 6 représente un synoptique d'une partie du dispositif de la figure 5.

Les dessins comportent pour l'essentiel des éléments de caractère certain. A ce titre, ils pourront non seulement servir à mieux faire comprendre la description détaillée ci-après mais aussi contribuer, le cas échéant, à la définition de l'invention.

On suppose maintenant que l'invention s'applique au réseau POINTEL dont on va maintenant décrire très brièvement la structure actuelle en se référant à la figure I.

Des stations autonomes SA, telles que des combinés téléphoniques portatifs, sont capables de coopération mutuelle à distance par canal radio avec des bornes fixes radio BFR. Les échanges radio entre les stations autonomes et les bornes sont régies par une norme britannique dite "CAI" ("Common Air Interface"). Les échanges se font par modulation de fréquence à raison d'une bande de fréquences par communication radio, cette bande de fréquences permettant le plus souvent l'établissement d'un canal pour l'échange de la voix et d'un canal pour l'échange de données numériques.

Ces bornes fixes BFR sont connectées à des unités de raccordement de bornes URB par un canal de commande spécialisé CCS. Chaque unité de raccordement de bornes gère ainsi un groupe de bornes fixes BFR.

Une borne fixe peut être directement connectée aux canaux téléphoniques CTPU du réseau téléphonique commuté public. Dans ce cas l'unité URB qui la gère n'est pas raccordée à ces canaux téléphoniques.

Une borne fixe peut ne pas être directement connectée aux canaux téléphoniques CTPU. Dans ce cas, son raccordement s'effectue par l'intermédiaire de son unité de raccordement qui est alors directement connectée aux canaux CTPU.

Chaque borne fixe BFR ne peut qu'émettre des appels téléphoniques vers les canaux téléphoniques CTPU mais peut bien sûr émettre ou recevoir des appels radio à destination ou en provenance des stations autonomes SA.

Le réseau de communication comprend, outre les canaux téléphoniques CTPU, un milieu de communication numérique CNPU, en principe de fonctionnement par paquets, tels que le réseau TRANSPAC (Marque déposée). Dans la suite du texte, l'expression "milieu de communication" sera remplacée par le terme "canal" à des fins d'homogénéité, bien que l'homme de métier sache alors que la signification du terme canal peut ne pas être la même que dans le cas des canaux téléphoniques.

Sur ces canaux de signalisation numériques CNPU sont raccordées les différentes unités URB ainsi que d'autres constituants du réseau POINTEL désignés sous les références CAP, CEPP et CEDP.

Le centre d'autorisation POINTEL CAP gère, pour l'ensemble du réseau POINTEL, les abonnements et donc les autorisations des usagers POINTEL à appeler une station fixe SF raccordée aux canaux téléphoniques CTPU, depuis une station autonome. A cet effet, les unités de raccordement de bornes URB sont reliées au centre CAP par les canaux numériques CNPU.

Les unités de raccordement URB sont également reliées au centre d'exploitation principal POINTEL CEPP, par les canaux numériques CNPU, aux fins de transfert d'informations relatives aux communications téléphoniques échangées afin que le centre CEPP puisse transmettre ces informations à un système de facturation.

Les centres d'exploitation décentralisés POINTEL CEDP sont des organes de gestion destinés à superviser régionalement le fonctionnement du réseau et à détecter notamment les anomalies de fonctionnement des unités de raccordement URB et/ou des bornes fixes BFR.

Il est à noter que les centres CEDP peuvent communiquer, par l'intermédiaire des canaux numériques, des informations au centre CEPP à des fins de supervision nationale.

Lorsqu'une station autonome SA désire appeler une station fixe SF, la borne fixe BFR concernée peut se raccorder au réseau téléphonique commuté public directement, ou bien par l'intermédiaire de l'unité de raccordement URB qui la gère, selon la configuration de raccordement du réseau adopté.

Comme déjà évoqué précédemment, il n'est pas possible, avec une telle configuration de réseau, d'établir des appels entrants.

Le but principal de l'invention est donc de pallier cette lacune.

A cet effet, d'une façon générale, on prévoit au moins un module spécifique comprenant :
— des premières et secondes interfaces téléphoniques respectivement raccordées aux canaux téléphoniques du réseau,
— des moyens d'interconnexion entre ces premières et secondes interfaces, et
— des moyens de traitement propres à répondre à une demande d'appel téléphonique d'une station appelante vers un numéro d'appel attribué à une station autonome appelable, cette demande d'appel étant reçue en l'une des premières interfaces.

En réponse à une telle demande, on cherche alors à établir en plus de la première connexion téléphonique de la station appelante vers ladite première interface du module spécifique, une deuxième connexion téléphonique de la station autonome vers l'une des secondes interfaces du module spécifique en fonction de conditions prédéterminées, et
— on réalise l'interconnexion des premières et secondes interfaces concernées.

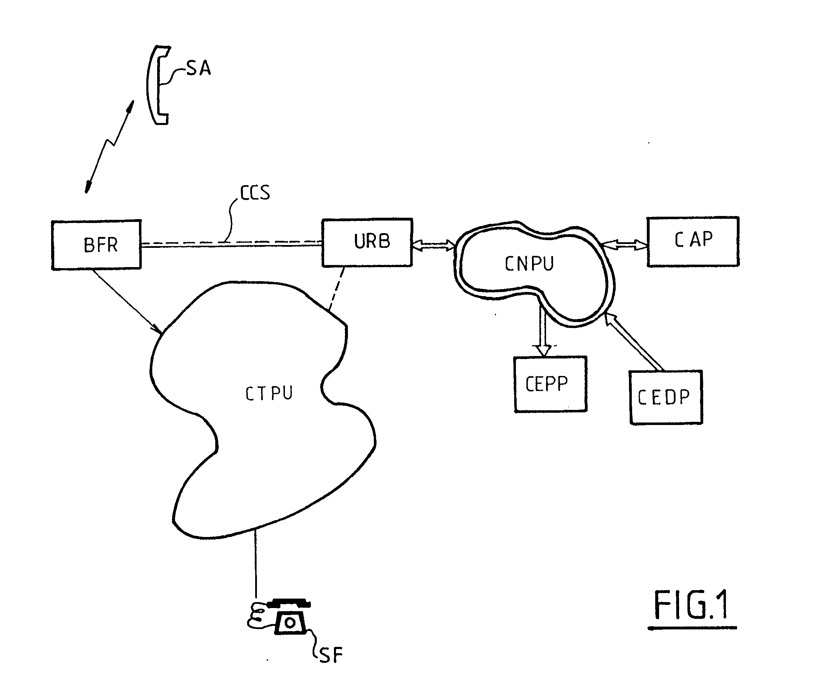

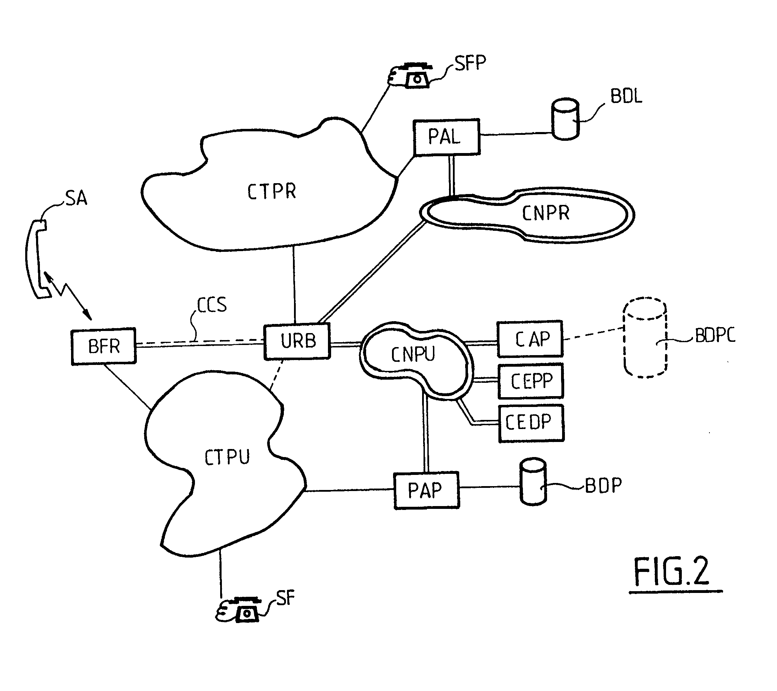

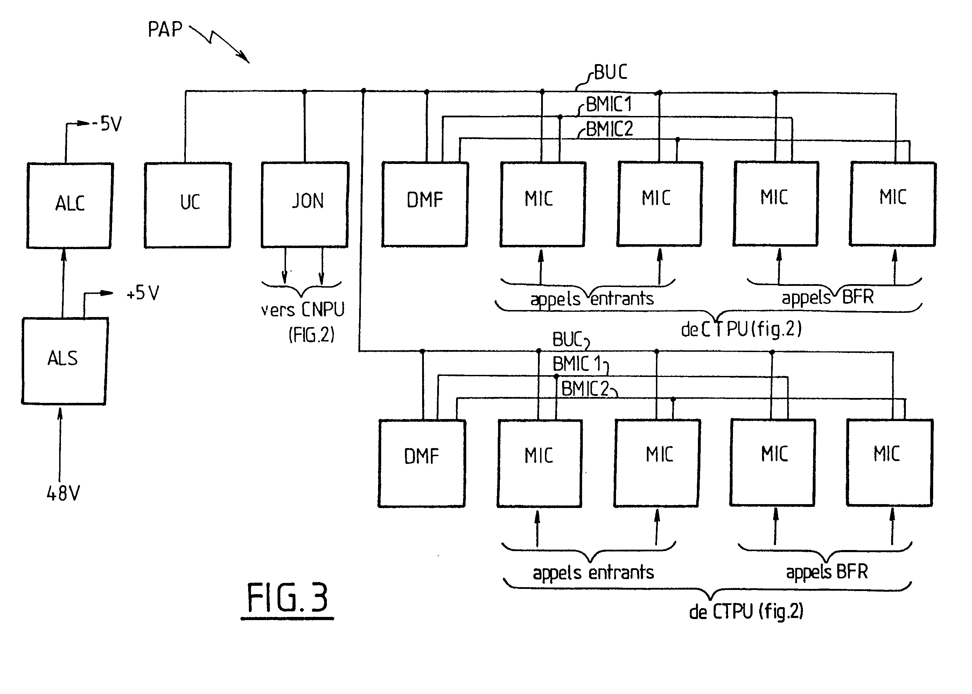

Si l'on se réfère à la figure 2, on voit que le module spécifique PAP est relié aux canaux téléphoniques CTPU et aux canaux numériques CNPU du réseau de communication public. Il est par ailleurs associé à une base de données BDP dont on reviendra plus en détail sur le contenu ci-après.

Les unités de raccordement de bornes URB permettent également la commutation vers des réseaux de commutation privés comportant également des canaux de téléphonie privés CTPR ainsi que des canaux de signalisation numérique privés CNPR. Dans ce cas, l'invention prévoit que le module spécifique, désigné cette fois-ci sous la référence PAL, puisse être incorporé au réseau de commutation privé, en association avec une base de données BDL, aux fins de permettre des appels entrants vers un combiné autonome SA en provenance par exemple d'un poste téléphonique SFP du réseau privé.

On s'intéresse maintenant plus particulièrement à l'établissement d'un appel entrant depuis une station fixe SF raccordée au réseau téléphonique commuté public CTPU vers un abonné ayant un combiné autonome SA.

Chaque station autonome appelable SA est affectée d'un numéro d'appel associé à son identifiant physique et à son lieu de rattachement habituel. Il est alors prévu que le dispositif comprenne une pluralité de modules spécifiques affectés respectivement à des secteurs de rattachement couvrant éventuellement une pluralité de lieux de rattachement voisins. La figure 2 illustre, à des fins de simplification, un seul module spécifique PAP affecté à un secteur de rattachement.

Afin que le combiné autonome SA puisse être appelé, en n'importe quel lieu géographique, il convient qu'il puisse être localisé vis-à-vis d'une borne fixe choisie. Cette information de localisation est stockée dans les moyens formant base de données BDP associés à chaque module spécifique PAP. Cette base de données BDP comporte, outre l'information de localisation de la borne fixe choisie BFR et donc de la station autonome SA, la correspondance entre le numéro d'appel de ce combiné SA et son identifiant physique.

Cette information de localisation résulte d'un dialogue de localisation entre la station autonome SA et la borne choisie BFR. On pourrait concevoir que ce dialogue de localisation soit effectué temporellement à intervalles réguliers, de façon à disposer en permanence d'une information de localisation de la station autonome sur tout le réseau. Cependant, étant donné que la couverture radio de chaque borne fixe BFR est de l'ordre de quelques dizaines à quelques centaines de mètres, une telle localisation conduirait en l'état actuel, sinon à une saturation du réseau téléphonique, du moins à un nombre très important d'informations de localisation qui conduiraient alors à une gestion trop lourde.

Aussi, la Demanderesse préfère-t-elle actuellement envisager le principe d'une localisation volontaire de la part d'un abonné souhaitant recevoir des appels téléphoniques sur son combiné autonome. Ce souhait est alors enregistré, dans la base de données BDP associée au module PAP. Il est également possible d'associer à ce souhait une durée maximale pendant laquelle l'abonné souhaite effectivement recevoir des appels téléphoniques. Une station autonome appelable sera donc équipée de moyens propres à signifier le refus ou l'acceptation de recevoir des appels téléphoniques. Une telle station autonome pourra ainsi manifester effectivement son intention de recevoir des appels.

Le dialogue de localisation peut être alors dans ce cas, soit l'émission depuis le combiné autonome SA vers la borne fixe BFR choisie par ce combiné d'un signal de localisation. Ce peut être également une communication téléphonique (entrante ou sortante) entre ce combiné et une borne choisie. La base de données BDP est alors propre à stocker éventuellement les deux types d'informations de localisation.

Pratiquement, la base de données BDP stocke, en correspondance du numéro d'appel du combiné autonome, l'identification numérique (par exemple l'adresse), sur les canaux numériques, de l'unité de raccordement de bornes URB ayant réalisé la dernière localisation à partir d'un signal de localisation émis jar le combiné, ainsi qu'une désignation, par exemple le numéro, de la borne fixe BFR choisie où a eu lieu cette dernière localisation. Lorsque cette information de localisation résulte d'une communication téléphonique, l'information de localisation est alors également l'adresse numérique de l'unité de raccordement de bornes ainsi que le numéro de la borne fixe sur laquelle a eu lieu cette dernière communication téléphonique.

Cette base de données BDP est, en ce qui concerne les informations de localisation notamment, mise à jour par les unités de raccordement de bornes URB grâce aux informations provenant du centre CAP ou des combinés autonomes.

Chaque base de données BDP (ici associée à un module PAP) possède une adresse permettant de la contacter sur les canaux numériques CNPU. Cette information est stockée dans une table d'abonnés mise à la disposition du centre CAP et possédant en outre une correspondance entre le numéro d'appel d'une station autonome et son identifiant physique, ainsi qu'une information relative à la faculté de cette station autonome de recevoir des appels entrants (cette faculté dépendant notamment du fait que l'abonné est ou non à jour de ses règlements).

On s'intéresse maintenant plus généralement à l'établissement de la deuxième connexion téléphonique de la station autonome vers l'une des secondes interfaces du module spécifique PAP. Cet établissement est, comme on le verra ci-après, soumis à la satisfaction de conditions prédéterminées.

En réponse à une demande d'appel téléphonique d'une station fixe appelante SF sur le réseau téléphonique commuté CTPU, les moyens de traitement du module PAP vont établir une liaison de commande avec la borne fixe choisie. Cette liaison de commande comporte, après consultation de la base de données BDP correspondante, une liaison numérique entre le module PAP et l'unité de raccordement de bornes URB dont l'adresse correspond à l'information de localisation. Plus précisément, l'établissement de cette liaison de commande comporte l'émission d'un signal numérique depuis le module spécifique PAP vers la borne choisie BFR par l'intermédiaire de son unité de raccordement URB. Ce signal numérique comporte, outre l'identification de la borne BFR, un ordre d'appel radio de la station autonome SA par cette borne BFR, ainsi qu'un numéro téléphonique d'appel du module spécifique par cette borne BFR.

Une première condition prédéterminée peut être tout d'abord la vérification de la capacité effective de la borne fixe choisie à coopérer avec le combiné. Cette vérification peut inclure par exemple le contrôle du bon fonctionnement de cette borne ou bien sa capacité à atteindre par ondes radio le combiné autonome appelé.

Une autre condition prédéterminée peut être également la vérification de la présence effective de l'abonné prêt à accepter l'appel téléphonique. On pourra ainsi prévoir que cette condition ne sera satisfaite que lorsque l'abonné appelé aura effectivement décroché son combiné.

Bien entendu, d'autes conditions prédéterminées peuvent être envisagées.

A partir de là, grâce au numéro d'appel communiqué antérieurement, cette borne choisie BFR est apte à réaliser son appel téléphonique pour l'établissement d'une liaison téléphonique avec ladite seconde interface concernée du module PAP.

On a vu précédemment que le module spécifique avait par ailleurs établi une première connexion téléphonique de la station appelante SF vers l'une de ses premières interfaces. Il convient alors maintenant d'en réaliser l'interconnexion afin de mettre en relation l'appelant et l'appelé.

Lorsque l'interconnexion est effectivement réalisée au sein du module spécifique, la deuxième connexion téléphonique de la station autonome vers la seconde interface est enregistrée comme étant à charge de l'abonné appelé afin de le facturer en conséquence. La première connexion téléphonique de la station appelante vers la première interface est enregistrée comme étant à charge de cette dernière aux fins de sa facturation. A cet égard, il convient de remarquer que, même si l'abonné de la station autonome n'est pas dans son lieu de rattachement habituel, l'abonné appelant ne paiera qu'une communication téléphonique depuis son lieu d'appel vers le lieu de rattachement habituel de l'abonné de la station autonome.

Si, par exemple, on s'aperçoit que l'une des bornes choisies locacisées ne permet pas une communication radio avec le combiné autonome, plusieurs solutions peuvent être envisagées, qui d'ailleurs ne constituent pas une liste exhaustive.

L'une d'entre elle peut consister à prévoir l'envoi d'un signal numérique à au moins une autre borne prise parmi les bornes voisines de la borne choisie localisée. L'envoi du ou de ces signaux numériques à ces autres bornes peuvent par exemple provenir de l'unité de raccordement gérant ce groupe de bornes. Ceci peut s'avérer particulièrement avantageux, notamment lorsque l'abonné désireux de recevoir des appels se situe en un lieu de réception suffisamment vaste pour être couvert par plusieurs bornes fixes. Cet abonné aura alors très bien pu se localiser par rapport à l'une de ces bornes puis, au cours de ses déplacements sur son site de réception, ne plus être en mesure de communiquer par radio avec cette borne choisie localisée mais avec une borne voisine.

Une autre solution peut consister en une nouvelle tentative d'établissement d'une communication radio entre la station autonome et une autre borne choisie dont l'information de localisation est également présente dans la base de données. Il peut par exemple s'agir de la borne avec laquelle a eu lieu une communication téléphonique antérieure. Cette nouvelle tentative serait alors par exemple effectuée par les moyens de traitement du module PAP.

Il convient de remarquer que toutes ces tentatives peuvent être effectuées simultanément ou successivement sans risque de conflits puisqu'une seule station autonome est concernée.

Un synoptique matériel d'un module spécifique PAP est illustré sur la figure 3. Un tel module permet la reception de 120 appels entrants simultanés, ce qui peut convenir pour environ 10 000 abonnés POINTEL.

Ce module PAP comporte des moyens d'alimentation ALS et ALC capables de fournir des tensions de + et -5 volts à partir de la tension de 48 volts délivrée par le réseau téléphonique commuté CTPU.

Les premières et secondes interfaces téléphoniques comprennent ici des cartes MIC de numérisation des signaux analogiques téléphoniques transitant sur les canaux de téléphonie. Ces cartes sont par exemple celles commercialisées par la société française AETA sous la référence ES 0290.

Les moyens d'interconnexion sont ici matérialisés par deux bus de liaison numériques BMIC1 et BMIC2 entre les différentes cartes MIC des premières et deuxièmes interfaces.

Chaque bus BMIC a une capacité de 2 Mégabits/s.

Il est également prévu des moyens d'interface numériques JON avec les canaux numériques de signalisation. Ces moyens d'interface comprennent ici par exemple une carte telle que celle commercialisée par la société MOTOROLA sous la référence MVME 333. Ils permettent de réaliser une interface numérique conformément à la norme internationale CCITT X25.

Les moyens de traitement UC sont reliés aux cartes JON et MIC par un bus BUC. Matériellement ils peuvent être réalisés par la carte commercialisée par la Société MOTOROLA sous la référence MVME II7A à base du processeur MOTOROLA 68010. A ce processeur est associée une mémoire vive dynamique de 2 Mégaoctets dans laquelle est incorporée la base de données BDP contenant les informations de localisation.

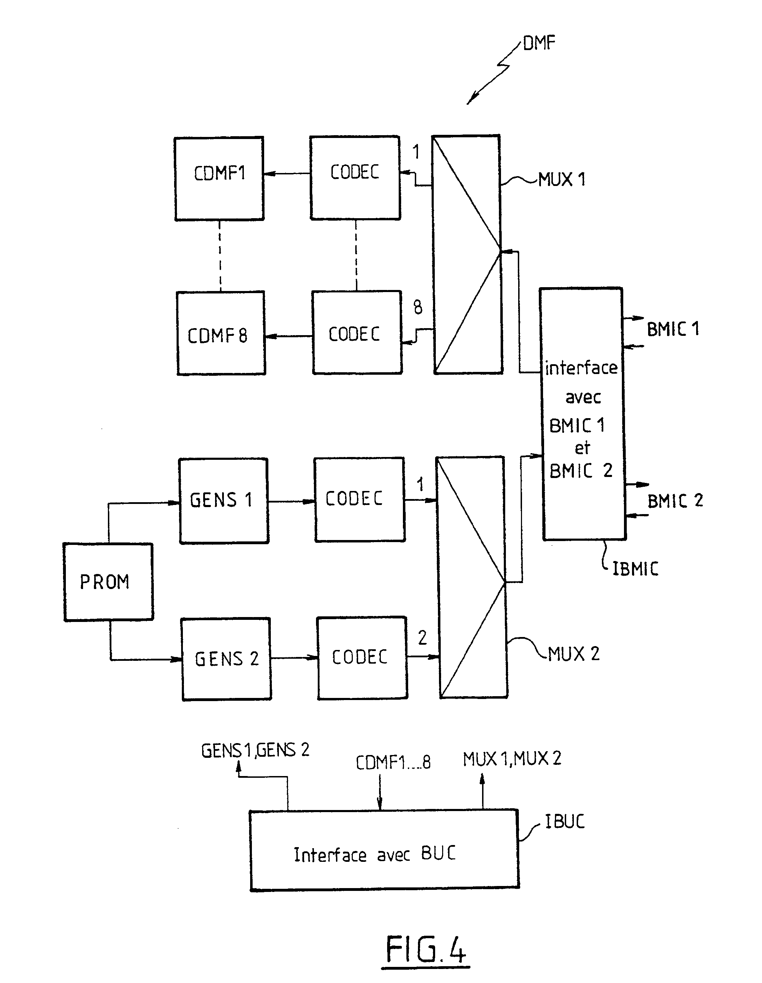

Une carte DMF est également incorporée dans le module PAP. Son synoptique schématique est illustré sur la figure 4.

Cette carte est reliée aux bus BMIC1 et BMIC2 par des moyens d'interface IBMIC, reliés à l'entrée d'un multiplexeur MUXI et à la sortie d'un autre multiplexeur MUX2. Les huit sorties du multiplexeur MUXI sont respectivement reliées à huit convertisseurs analogique/numérique CODEC suivis de huit décodeurs CDMFI-CDMF8 propres à décoder le numéro d'appel de l'abonné codé selon la norme internationale CCITT Q23. Chaque composant CODEC est par exemple celui commercialisé par la société SGS-THOMSON sous la référence ETC 5067. Chaque décodeur CDMF est par exemple celui commercialisé par la société britannique PLESSEY sous la référence MV 8870 DP.

Cette carte DMF permet en outre l'émission de messages enregistrés de mise en attente vers les usagers appelants. A cet égard il est prévu deux générateurs de synthèse vocale GENSI, GENS2 associés à une mémoire morte programmable PROM. La structure de chaque générateur GENS est basée autour d'un processeur de traitement du signal tel que celui commercialisé par la société des Etats-Unis TEXAS INSTRUMENT sous la référence TMS 50C20. Ces deux générateurs sont reliés aux deux entrées des multiplexeurs MUX2 par l'intermédiaire de deux convertisseurs CODEC.

Il est enfin prévu des moyens d'interface IBUC entre ces différents constituants et le bus BUC.

L'établissement d'un appel entrant depuis un abonné d'un réseau de communication privé est effectué d'une manière analogue à celle décrite pour le réseau de communication publique. Le module spécifique PAL est alors associé à une base de données BDL analogue à la base de données BDP.

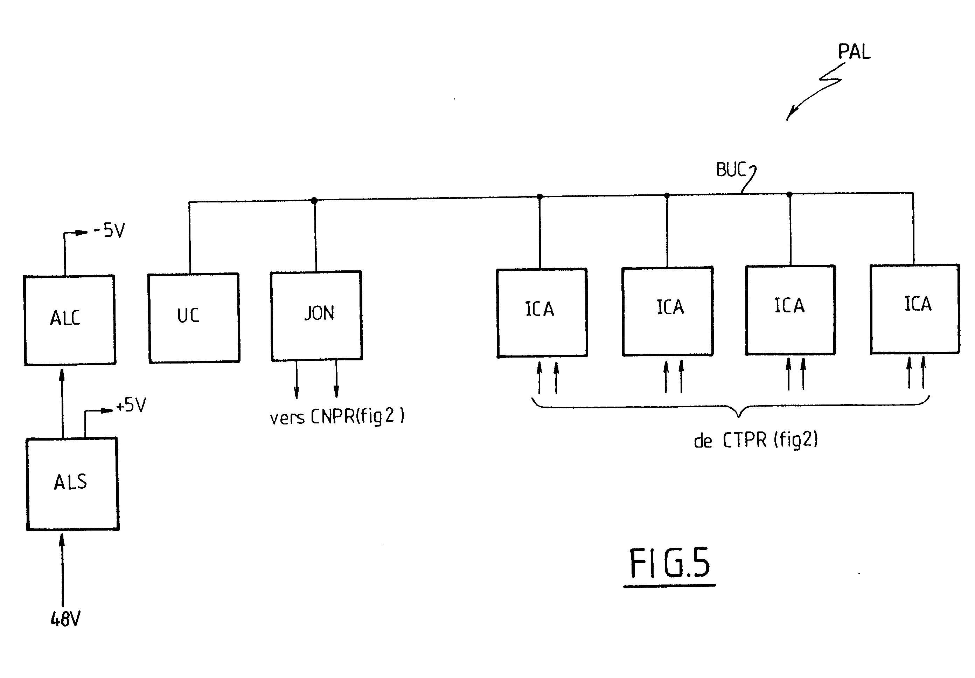

La structure matérielle d'un tel module spécifique PAL est illustrée schématiquement sur la figure 5.

Dans un tel module spécifique, à raccordement analogique, les cartes MIC et DMF du module PAP sont remplacées par des cartes d'interface de circuits d'abonnés ICA, dont le

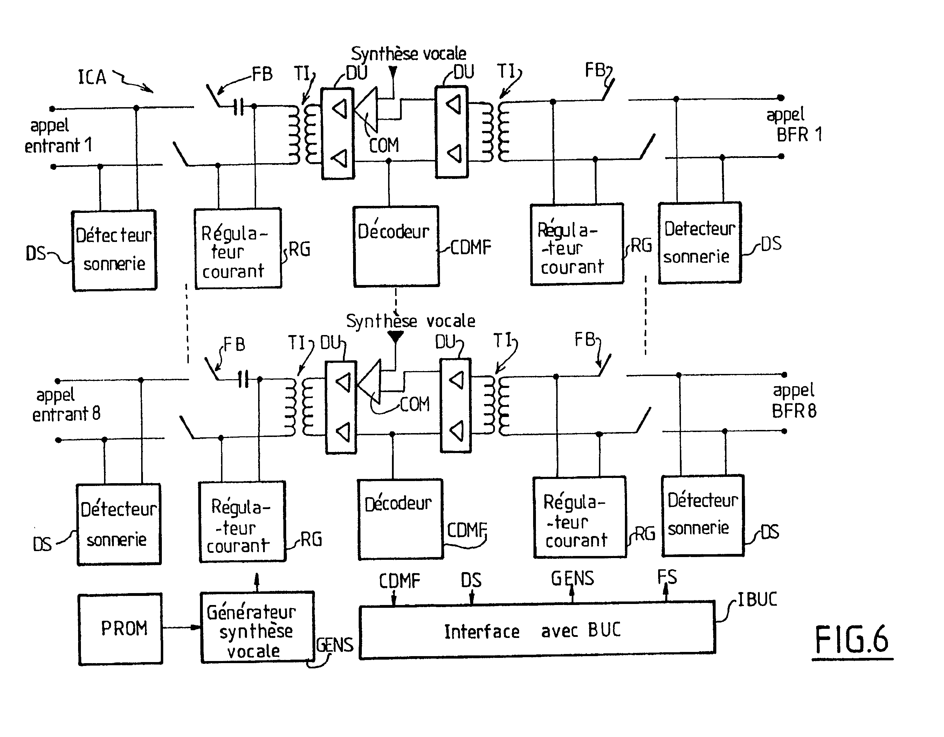

Dans un tel module spécifique, à raccordement analogique, les cartes MIC et DMF du module PAP sont remplacées par des cartes d'interface de circuits d'abonnés ICA, dont le synoptique de l'une d'entre elles est illustré sur la figure 6. Ces cartes assurent la connexion des appels entrants et des appels provenant des bornes fixes BFR. Une carte ICA regroupe huit circuits d'abonnés et permet donc l'établissement de huit appels entrants simultanés.

Le numéro d'appel de l'abonné POINTEL recherché est codé selon la norme internationale CCITT Q23 comme dans le cas du module PAP.

La carte ICA comprend essentiellement les éléments suivants :

    – en ce qui concerne les premières et secondes interfaces :

       . un circuit de détection de sonnerie DS, suivi d'un circuit de fermeture/ouverture de boucle FB (relais), puis d'un circuit de régulation de courant RG, d'un transformateur d'isolement TI, et d'un duplexeur DU.

En ce qui concerne les premières interfaces, c'est-à-dire celles relatives à la connexion avec l'appelant :

    – un circuit décodeur CDMF, relié aux deux duplexeurs DU, et

    – un commutateur COM pour une arrivée de synthèse vocale.

A cet égard il est également prévu le générateur de synthèse vcale GENS, associé à la mémoire morte programmable PROM de messages préenregistrés.

Il est enfin prévu une interface IBUC avec le bus BUC de la carte ICA, relié au moyen de traitement UC et à la carte JON.

L'invention n'est pas limitée aux modes de réalisation ci-dessus décrits mais en embrasse toutes les variantes contenues dans le cadre des revendications ci-après, notamment les suivantes :

    – la structure décrite ci-avant pour le module PAP conviendrait également à un raccordement de ce dernier à un réseau de communication privé. De même le module PAL pourrait être raccordé aussi à un réseau de communication public.

    – on a décrit ici des moyens formant bases de données réparties et associées à chaque module spécifique PAP ou PAL. On pourrait également envisager que ces moyens formant base de données soient centralisés et raccordés alors au centre d'autorisation POINTEL CAP, comme représenté en pointillé sur la figure 2 sous la référence BDPC.

Il n'est également pas impossible de concevoir un module PAP centralisé qui pourrait par exemple être incorporé au centre CAP.

    – On pourrait bien sûr envisager des appels téléphoniques provenant d'une station autonome appelante vers une station autonome appelable. Dans ce cas la borne fixe coopérant avec la station autonome appelante joue le rôle de la station fixe appelante SF décrite ci-avant.

    – Plus généralement, une station autonome n'est pas limitée à un combiné téléphonique mais concerne tout objet capable de coopération avec une borne fixe.

Bien entendu, certains des moyens décrits ci-dessus peuvent être omis dans les variantes où ils ne servent pas.

**Revendications**

1.- Dispositif téléphonique, destiné à servir dans un réseau de communication entre stations fixes et bornes fixes capables de coopération mutuelle à distance avec des stations autonomes, en réponse à des demandes d'appel de ces dernières, caractérisé en ce qu'il comprend au moins un module spécifique (PAP) comprenant

    – des premières et secondes interfaces téléphoniques (MIC) respectivement raccordées aux canaux téléphoniques du réseau;

    – des moyens d'interconnexion (BMIC) entre ces premières et secondes interfaces;

    – des moyens de traitement (UC) propres à répondre à une demande d'appel téléphonique d'une station appelante (SF) vers un numéro d'appel attribué à une station autonome (SA) appelable, ladite demande d'appel étant reçue en l'une des premières interfaces :

       . en cherchant à établir en plus de la première connexion téléphonique de la station appelante vers ladite première interface, une deuxième connexion téléphonique de la station autonome vers l'une des secondes interfaces en fonction de conditions prédéterminées, et

       . en réalisant l'interconnexion des première et seconde interfaces concernées.

2.- Dispositif selon la revendication I, caractérisé en ce rue la station appelable comporte des moyens propres à signifier le refus ou l'acceptation de recevoir des appels téléphoniques.

3.- Dispositif selon la revendication I ou 2, caractérisé en ce que l'établissement de la deuxième connexion téléphonique comprend l'établissement d'une liaison téléphonique entre ladite seconde interface concernée et une borne fixe choisie (BFR), capable de coopérer avec la station autonome appelable.

4.- Dispositif selon la revendication 3, caractérisé en ce que l'établissement de ladite liaison téléphonique résulte d'un appel téléphonique de ladite borne choisie vers le module spécifique.

5.- Dispositif selon la revendication 4, caractérisé en ce que, le réseau de communication étant muni en outre d'un milieu de communication numérique (CNPU) le module spécifique comporte en outre des moyens d'interface numériques (JON) reliés audit milieu,

et en ce que les moyens de traitement sont propres, en vue de l'établissement de la deuxième connexion téléphonique, à établir une liaison numérique, sur ledit milieu, entre les moyens d'interface numériques et ladite borne choisie, antérieurement à l'établissement de ladite liaison téléphonique sur les canaux téléphoniques.

6.- Dispositif selon la revendication 5, caractérisé en ce que l'établissement de la liaison numérique comporte l'émission d'un signal numérique depuis le module spécifique vers ladite borne choisie.

7.- Dispositif selon l'une des revendications 3 à 6, caractérisé en ce qu'il comprend en outre des moyens formant base de données (BDP), reliés au module spécifique et propres à stocker en correspondance du numéro d'appel de la station autonome une information de localisation de ladite borne choisie, permettant l'établissement de ladite liaison téléphonique.

8.- Dispositif selon la revendication 7, caractérisé en ce que l'information de localisation résulte d'un dialogue de localisation entre la station autonome appelable et ladite borne choisie.

9.- Dispositif selon la revendication 8, caractérisé en ce que le dialogue de localisation comporte l'émission d'un signal de localisation depuis la station autonome appelable vers ladite borne choisie.

10.- Dispositif selon la revendication 8, caractérisé en ce que le dialogue de localisation comporte une communication téléphonique entre la station autonome et la borne choisie.

11.- , Dispositif selon l'une des revendications 7 à 10, caractérisé en ce que les moyens formant base de données sont propres à stocker deux informations de localisation de types différents.

12.- Dispositif selon l'une des revendications 5 et 6 prise en combinaison avec l'une des revendications 7 à 11, caractérisé en ce que l'information de localisation est une information de type numérique permettant l'établissement de ladite liaison numérique.

13.- Dispositif selon la revendication 12, caractérisé en ce qu'il comprend des unités de raccordement (URB) de bornes fixes, chaque unité de raccordement étant reliée d'une part à un groupe de bornes fixes, d'autre part au moins au milieu de communication numérique du réseau,

en ce que l'information de localisation comporte l'identification numérique de l'unité de raccordement reliée à ladite borne choisie, ainsi que la désignation de ladite borne choisie au sein du groupe de bornes géré par cette unité de raccordement.

14.- Dispositif selon l'une des revendications 3 à l3, caractérisé en ce que lesdites conditions prédéterminées comportent la vérification de la capacité effective de la borne choisie à coopérer avec la station autonome.

15.- Dispositif selon l'une des revendications précédentes, caractérisé en ce que lesdites conditions prédéterminées comportent la vérification de la présence effective d'un abonné de la station autonome, prêt à accepter l'appel téléphonique.

16.- Dispositif selon la revendication l4 ou l5, caractérisé en ce que, en cas de non satisfaction des conditions prédéterminées relativement à ladite borne choisie, le dispositif est apte à chercher à établir la liaison téléphonique avec au moins une autre borne prise parmi les bornes voisines de ladite borne choisie.

17.- Dispositif selon l'une des revendications précédentes, caractérisé en ce que le numéro d'appel de la station autonome est associé à son lieu de rattachement habituel,

en ce que le dispositif comprend une pluralité de modules spécifiques affectés respectivement à une pluralité de lieux de rattachement voisins.

18.- Dispositif selon la revendication l7, caractérisé en ce que les moyens formant base de données sont répartis en des bases de données locales associées à chaque module spécifique et disposant des informations de localisation des bornes choisies relatives à leurs stations autonomes habituelles.

19.- Dispositif selon la revendication l7, caractérisé en ce que les moyens formant base de données (BDPC) sont centralisés, chaque module spécifique ayant accès à ces moyens formant base de données.

20.- Dispositif selon l'une des revendications précédentes, prise en combinaison avec la revendication l3 caractérisé en ce que, en ce qui concerne les informations de localisation, les moyens formant base de données sont mis à jour par les unités de raccordement de bornes.

21.- Dispositif selon l'une des revendications précédentes, caractérisé en ce que les premières et secondes interfaces téléphoniques du module spécifique (PAP) sont propres à être raccordées à un réseau de communication public.

22.- Dispositif selon l'une des revendications l à 20, caractérisé en ce que les premières et secondes interfaces téléphoniques du module spécifique (PAL) sont propres à être raccordées à un réseau de communication privé.

23.- Dispositif selon la revendication 2l ou 22, caractérisé en ce que les premières et secondes inferfaces comportent une pluralité de cartes (MIC) de numérisa:ion des signaux téléphoniques, reliées par au moins un bus de liaison (BMICI,BMIC2) formant les moyens d'interconnexion, et en ce qu'il est prévu des moyens (DMF) propres à décoder le numéro d'appel de la station appelée ainsi qu'à émettre des messages vocaux d'attente préenregistrés.

**24.-** Dispositif selon la revendication 2I ou 22, caractérisé en ce que chaque première et seconde interface comporte un circuit de détection de sonnerie (DS), suivi d'un circuit de fermeture/ouverture de boucle (FB) puis d'un circuit de régulation de courant (RG), d'un transformateur d'isolement (TI) et d'un duplexeur, et en ce que chaque première interface comporte un circuit décodeur (CDMF) du numéro appelé ainsi qu'un commutateur (COM) par une arrivée de synthèse vocale (GENS, PROM).

**25.-** Dispositif selon l'une des revendications précédentes, caractérisé en ce que la première connexion téléphonique est enregistrée à charge de l'abonné appelant et la deuxième connexion téléphonique à charge de l'abonné appelé.

**26.-** Procédé d'interconnexion téléphonique, destiné à servir dans un réseau de communication entre stations fixes et bornes fixes capables de coopération mutuelle à distance avec des stations autonomes, en réponse à des demandes d'appel de ces dernières, caractérisé en ce qu'on prévoit au moins un module spécifique comprenant :

    – des premières et secondes interfaces téléphoniques respectivement raccordées aux canaux téléphoniques du réseau,

    – des moyens d'interconnexion entre ces premières et secondes interfaces,

    – des moyens de traitement propres à répondre à une demande d'appel téléphonique d'une station fixe appelante vers un numéro d'appel attribué à une station autonome appelable, ladite demande étant reçue en l'une des premières interfaces,

et en ce qu'en réponse à une telle demande d'appel téléphonique :

    . on cherche à établir, en plus de la première connexion téléphonique de la station appelante vers ladite première interface, une deuxième connexion téléphonique de la station autonome vers l'une de ses secondes interfaces en fonction de conditions prédéterminées, et

    . on réalise l'interconnexion des première et seconde interfaces concernées.

FIG.1

EP 0 456 547 A1

FIG.2

FIG.3

FIG.4

FIG.5

EP 0 456 547 A1

FIG.6

Office européen
des brevets

# RAPPORT DE RECHERCHE EUROPEENNE

Numero de la demande

EP  91 40 1107

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | PATENT ABSTRACTS OF JAPAN vol. 10, no. 386 (E-467)(2443) 24 Décembre 1986 & JP-A-61 177 830 (NEC CORP. ) 9 Août 1986 * le document en entier * | 1,3,4,26 | H04Q7/04 H04B7/26 |
| Y | GB-A-2 193 861 (BRITISH TELECOMMUNICATIONS) <br><br> * page 1, ligne 5 - ligne 55 * <br> * page 1, ligne 64 - page 3, ligne 115 * | 1,2, 7-11, 13-20 | |
| Y | DE-A-2 228 327 (TEKADE) <br><br> * page 1, ligne 1 - ligne 12 * <br> * page 2, ligne 27 - page 3, ligne 33 * <br> * page 4, ligne 13 - page 6, ligne 12 * <br> * page 8, ligne 27 - page 9, ligne 22 * | 1,2, 7-11, 13-20 | |
| A | EP-A-212 761 (PHILIPS) <br> * colonne 1, ligne 41 - colonne 2, ligne 14 * <br> * colonne 2, ligne 51 - colonne 5, ligne 7 * <br> * colonne 5, ligne 39 - ligne 55 * | 1-26 | DOMAINES TECHNIQUES RECHERCHES (Int. Cl.5 ) |
| A | EP-A-137 865 (ANT) <br> * page 3, ligne 5 - ligne 20 * <br> * page 4, ligne 34 - page 5, ligne 36 * | 1-26 | H04Q H04M |
| A | TELCOM REPORT no. 5, Septembre 1989, MUNCHEN (DE) pages 142 - 145; H.AUSPURG: 'Intelligente Netze beschleunigen Einfürung neuer Dienste ' * le document en entier * | | |
| X,P | GB-A-2 234 649 (STC PLC) <br><br> * page 3, ligne 9 - ligne 21 * <br> * page 7, ligne 5 - page 10, ligne 17 * <br> * page 13, ligne 33 - page 15, ligne 7 * | 1,3-10, 21,22,26 | |

Le présent rapport a été établi pour toutes les revendications

| Lieu de la recherche | Date d'achèvement de la recherche | Examinateur |
|---|---|---|
| LA HAYE | 12 AOUT 1991 | gerling |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................................
& : membre de la même famille, document correspondant

EPO FORM 1503 03.82 (P0402)